# EUROPEAN PATENT APPLICATION

(11) **EP 4 793 843 A1**
(43) Date of publication of application: **19.08.2026**
(21) Application number: 24877199.0
(22) Date of filing: 09.10.2024
(51) Int. Cl.: G06N 20/00

(54) **TRAINING DATA GENERATION DEVICE, TRAINING DATA GENERATION METHOD, AND TRAINING DATA GENERATION PROGRAM**

(30) Priority: 12.10.2023 JP 2023176970
(71) Applicant: Resonac Corporation, Tokyo 105-7325 (JP)
(72) Inventor: KINDAICHI, Rimpei, Tokyo 105-7325 (JP)
(74) Representative: Strehl & Partner mbB
(86) International application number: PCT/JP2024/036100
(87) International publication number: WO 2025/079604

(57) **Abstract**

A training data generation apparatus for generating training data for constructing a surrogate model includes a determination unit configured to randomly determine an initial value of input data and a final value of the input data, a path generation unit configured to generate one or more paths from the determined initial value to the determined final value by randomly assigning, to respective steps along the one or more paths, one or more change amounts that can be taken at the respective steps, and a training data generation unit configured to generate training data including the determined initial value, the determined final value, and the one or more change amounts assigned to the respective steps in the generated one or more paths.

## Description

### TECHNICAL FIELD

The disclosures herein relate to training data generation apparatuses, training data generation methods, and training data generation programs.

### BACKGROUND ART

In recent years, prediction processing using surrogate models has been utilized as an alternative to physical simulation. A surrogate model refers to a model constructed based on training using simulation results obtained from physical simulations performed with, for example, a simulation apparatus that reproduces a manufacturing process. By performing prediction processing using the surrogate model, a calculation cost can be significantly reduced compared with a case of performing physical simulation using the simulation apparatus.

Here, when performing physical simulation to generate training data for the purpose of constructing the surrogate model, it is important from the viewpoint of prediction accuracy of the surrogate model to perform physical simulation under various simulation patterns generated based on, for example, random walk theory.

### CITATION LIST

### NON-PATENT LITERATURE

NPL 1: Yangzi He, Shabnam J. Semnani, "Machine learning based modeling of path-dependent materials for finite element analysis", Computers and Geotechnics 156 (2023) 105254, [retrieved September 7, 2023], Internet <URL: https://doi.org/10.1016/j.compgeo.2023.105254>

### SUMMARY OF THE INVENTION

### PROBLEM TO BE SOLVED

However, when simulation patterns are generated based on random walk theory, a problem arises in that, as the number of simulation patterns increases, newly generated simulation patterns tend to be biased toward the average value of those generated previously.

According to the present disclosure, it is possible to reduce bias of simulation patterns when generating training data for constructing a surrogate model.

### MEANS FOR SOLVING PROBLEM TO BE SOLVED

Aspect 1 of the present disclosure is a training data generation apparatus for generating training data for constructing a surrogate model including:
a determination unit configured to randomly determine an initial value of input data and a final value of the input data;
a path generation unit configured to generate one or more paths from the determined initial value to the determined final value by randomly assigning, to respective steps along the one or more paths, one or more change amounts that can be taken at the respective steps; and
a training data generation unit configured to generate training data including the determined initial value, the determined final value, and the one or more change amounts assigned to the respective steps in the generated one or more paths.

Aspect 2 of the present disclosure is the training data generation apparatus according to aspect 1, further including an extraction unit configured to extract, from among the generated one or more paths, a path in which a total change amount obtained by summing the one or more change amounts assigned to respective steps is equal to a difference value between the determined final value and the determined initial value, wherein the training data generation unit is configured to generate training data including the determined initial value, the determined final value, and the one or more change amounts assigned to the respective steps of the extracted path.

Aspect 3 of the present disclosure is the training data generation apparatus according to aspect 1, further including a first setting unit configured to receive a range of the initial value of the input data and a range of the final value of the input data, respectively, wherein the determination unit is configured to randomly determine, within said ranges the first setting unit has received, the initial value of the input data and the final value of the input data, respectively.

Aspect 4 of the present disclosure is the training data generation apparatus according to aspect 1, further including a second setting unit configured to receive a number of the steps, wherein the path generation unit is configured to randomly assign, to the respective steps whose number the second setting unit has received, the one or more change amounts that can be taken at the respective steps.

Aspect 5 of the present disclosure is the training data generation apparatus according to aspect 2, further including a third setting unit configured to receive the one or more change amounts that can be taken at the respective steps, wherein the path generation unit is configured to randomly assign the one or more change amounts received by the third setting unit to the respective steps.

Aspect 6 of the present disclosure is the training data generation apparatus according to aspect 2, further including an acquisition unit configured to acquire a simulation result with the determined initial value, the determined final value, and the one or more change amounts assigned to the respective steps of the extracted path as input data input to a simulation apparatus, wherein the training data generation unit is configured to generate the training data including the one or more change amounts assigned to the respective steps of the extracted path and the simulation result.

Aspect 7 of the present disclosure is a training data generation method for generating training data for constructing a surrogate model, wherein a computer of a training data generation apparatus is configured to execute:
randomly determining an initial value of input data and a final value of the input data;
generating one or more paths from the determined initial value to the determined final value by randomly assigning, to respective steps along the one or more paths, one or more change amounts that can be taken at the respective steps; and
generating training data including the determined initial value, the determined final value, and the one or more change amounts assigned to the respective steps in the generated one or more paths.

Aspect 8 of the present disclosure is a training data generation program for causing a computer of a training data generation apparatus to execute:
randomly determining an initial value of input data and a final value of the input data;
generating one or more paths from the determined initial value to the determined final value by randomly assigning, to respective steps along the one or more paths, one or more change amounts that can be taken at the respective steps; and
generating training data including the determined initial value, the determined final value, and the one or more change amounts assigned to the respective steps in the generated one or more paths.

### EFFECTS OF THE INVENTION

According to the present disclosure, it is possible to reduce a bias of a simulation pattern when generating training data for constructing a surrogate model.

### BRIEF DESCRIPTION OF THE DRAWINGS

[FIG. 1] FIG. 1 is a drawing illustrating an example of a system configuration of a training system.
[FIG. 2] FIG. 2 is a drawing illustrating an example of a hardware configuration of a training data generation apparatus.
[FIG. 3] FIG. 3 is a drawing illustrating specific examples of time series data from various simulation patterns.
[FIG. 4] FIG. 4 is a drawing illustrating a detailed example of a functional configuration of a generation unit.
[FIG. 5] FIG. 5 is an example of a flowchart illustrating a flow of training data generation processing.
[FIG. 6] FIG. 6 is a first drawing illustrating specific examples of training data.
[FIG. 7] FIG. 7 is a drawing illustrating an example of distribution of input data of the training data generated by the training data generation processing.
[FIG. 8] FIG. 8 is a drawing illustrating an example of a path generated by the training data generation processing.
[FIG. 9] FIG. 9 is a first drawing illustrating an example of prediction accuracy of a trained model trained using the training data generated by the training data generation processing.
[FIG. 10] FIG. 10 is a second drawing illustrating specific examples of the training data.
[FIG. 11] FIG. 11 is a second drawing illustrating an example of the prediction accuracy of the trained model trained using the training data generated by the training data generation processing.

### DESCRIPTION OF THE PREFERRED EMBODIMENTS

In the following, embodiments of the present invention will be described with reference to the accompanying drawings. In the drawings, the same or corresponding constituent elements are denoted with the same reference numerals, and redundant description thereabout may be omitted.

### [FIRST EMBODIMENT]

### <SYSTEM CONFIGURATION OF TRAINING SYSTEM>

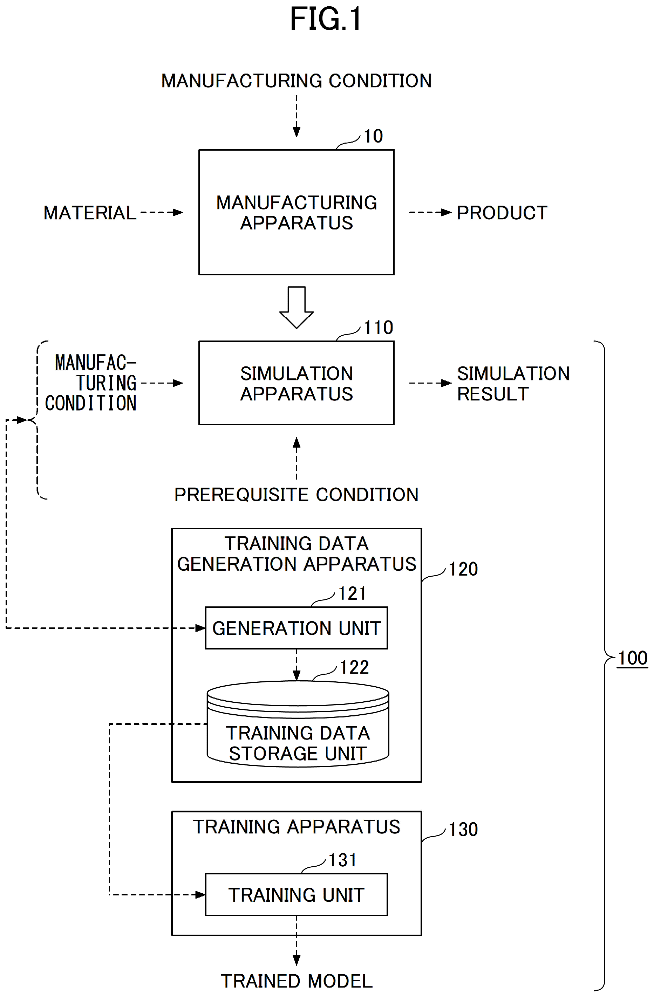

First, the system configuration of a training system including a training data generation apparatus according to the first embodiment will be described. FIG. 1 is a drawing illustrating an example of a system configuration of the training system.

As shown in FIG. 1, a training system 100 includes a simulation apparatus 110, a training data generation apparatus 120, and a training apparatus 130.

The simulation apparatus 110 is an apparatus reproducing a manufacturing apparatus 10. Prerequisite conditions (e.g., structure, size, material of the apparatus) for reproducing the manufacturing apparatus 10 are set for the simulation apparatus 110. Further, by setting the prerequisite conditions, various manufacturing conditions (physical quantities controlled by the manufacturing apparatus 10 during manufacturing, such as, for example, temperature, pressure, flow rate, etc.) are input to the simulation apparatus 110 reproducing the manufacturing apparatus 10, and physical simulation is executed.

In the first embodiment, it is assumed that the manufacturing conditions input to the simulation apparatus 110 are time series data, and the time series data from various simulation patterns are included. Specifically, the time series data from various simulation patterns include:
- time series data from various simulation patterns in which combinations of the initial value and the final value of the manufacturing conditions are different from each other; and
- time series data from various simulation patterns in which combinations of the initial value and the final value of the manufacturing conditions are identical, but intermediate paths are different from one another.

The training data generation apparatus 120 has a training data generation program installed, and by executing the program, the training data generation apparatus 120 functions as a generation unit 121.

The generation unit 121 generates training data for each prerequisite condition set for the simulation apparatus 110.

Specifically, the generation unit 121 generates time series data from various simulation patterns as manufacturing conditions under respective prerequisite conditions. Further, the generation unit 121 inputs the generated time series data from various simulation patterns to the simulation apparatus 110 in which corresponding prerequisite conditions are set, which executes physical simulation and acquires simulation results. Further, the generation unit 121 generates training data for each prerequisite condition by associating the time series data from various simulation patterns with respective simulation results for each prerequisite condition. The generation unit 121 stores the generated training data in a training data storage unit 122.

The training apparatus 130 has a training program installed, and by executing the program, the training apparatus 130 functions as a training unit 131.

The training unit 131 reads the training data from the training data storage unit 122 and constructs a surrogate model as a trained model by training a model by using the read training data.

### <HARDWARE CONFIGURATION OF TRAINING DATA GENERATION APPARATUS>

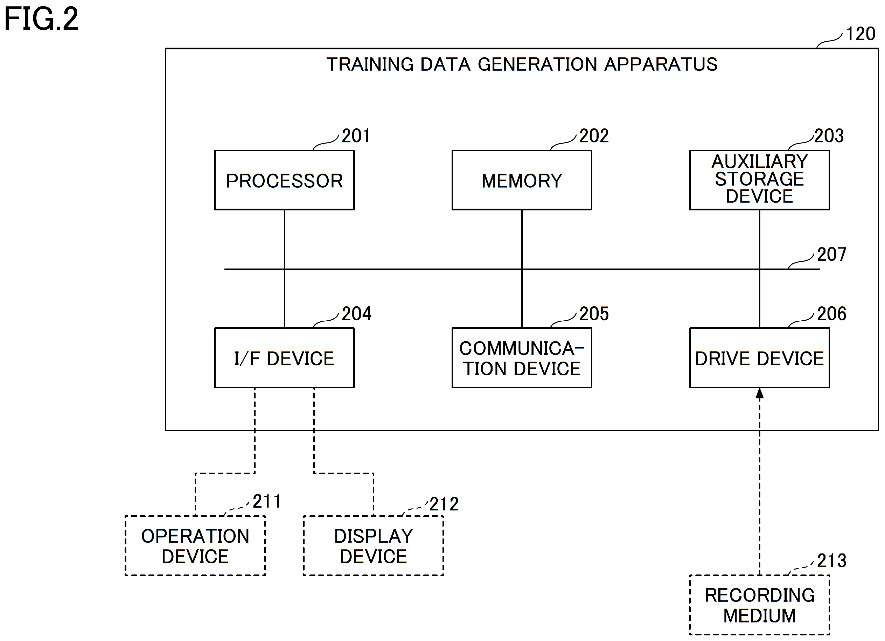

Next, a hardware configuration of the training data generation apparatus 120 will be described. FIG. 2 is a drawing illustrating an example of the hardware configuration of the training data generation apparatus. As shown in FIG. 2, the training data generation apparatus 120 includes a processor 201, a memory 202, an auxiliary storage device 203, an I/F (interface) device 204, a communication device 205, and a drive device 206. The respective hardware components of the training data generation apparatus 120 are interconnected via a bus 207.

The processor 201 includes a plurality of computing devices such as a CPU (Central Processing Unit) and a GPU (Graphics Processing Unit). The processor 201 executes a plurality of programs by reading a plurality of programs (e.g., a training data generation program or the like) into the memory 202.

The memory 202 includes a main storage device such as a ROM (Read Only Memory) and a RAM (Random Access Memory). The processor 201 and the memory 202 form what is called a computer, and the computer achieves a plurality of functions by executing a plurality of programs read from the memory 202 by the processor 201.

The auxiliary storage device 203 stores a plurality of programs and a plurality of data used when the plurality of programs are executed by the processor 201. For example, the training data storage unit 122 is achieved in the auxiliary storage device 203.

The I/F device 204 is a connection device for connecting an operation device 211 and a display device 212, which are examples of user interface devices. The communication device 205 is a communication device for communicating with an external device via a network (not shown).

The drive device 206 is a device for setting a recording medium 213. Here, the recording medium 213 includes a medium for recording information optically, electrically, or magnetically, such as a CD-ROM, a flexible disk, or a magneto-optical disk. The recording medium 213 may include a semiconductor memory for electrically recording information, such as a ROM or a flash memory.

The plurality of programs installed in the auxiliary storage device 203 are installed, for example, when a distributed recording medium 213 is set in the drive device 206 and the plurality of programs recorded in the recording medium 213 are read out by the drive device 206. Alternatively, the plurality of programs installed in the auxiliary storage device 203 may be installed when they are downloaded from the network via the communication device 205.

In the example of FIG. 2, the hardware configuration of the training data generation apparatus 120 among the apparatuses included in the training system 100 is shown. However, the simulation apparatus 110 and the training apparatus 130, which are other apparatuses included in the training system 100, also have the same hardware configuration as the training data generation apparatus 120. Therefore, description of the hardware configurations of the simulation apparatus 110 and the training apparatus 130 will be omitted.

### <SPECIFIC EXAMPLE OF TIME SERIES DATA>

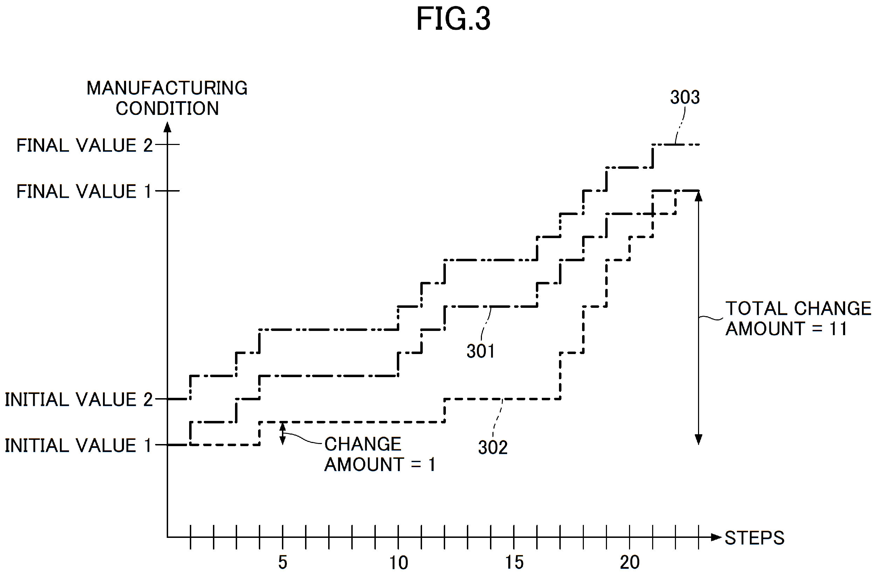

Next, specific examples of time series data from various simulation patterns generated as manufacturing conditions by the generation unit 121 of the training data generation apparatus 120 will be described. FIG. 3 is a drawing illustrating specific examples of time series data from various simulation patterns.

In FIG. 3, the horizontal axis represents steps, and the vertical axis represents manufacturing conditions. A step is a time width obtained by dividing a time width from the start of simulation by the simulation apparatus 110 to the end of simulation by a predetermined number (referred to as the number of steps) and indicates a minimum time width when the manufacturing conditions are changed with time.

The example of FIG. 3 shows how time series data from three simulation patterns when the number of steps is 23 are generated as manufacturing conditions. Among them, time series data indicated by reference numeral 301 and reference numeral 302 indicate time series data in which the combination of the initial value and the final value of the manufacturing conditions (initial value: 1, final value: 1) is the same, but the intermediate paths are different from each other. The time series data indicated by reference numeral 303 indicates time series data in which the combination of the initial value and the final value of the manufacturing conditions (initial value: 2, final value: 2) is different from the time series data indicated by reference numeral 301, but the intermediate paths are the same.

Assuming that the length of the doubleheaded arrows shown in FIG. 3 corresponds to +1, the example shown in FIG. 3 illustrates that the manufacturing conditions vary by three levels per step: ±0, +1, and +2. The example of FIG. 3 also shows that the total change amount of the time series data is 11. However, the change amounts of the manufacturing conditions per step are not limited to vary by three levels. The change amounts of the manufacturing conditions per step may include not only a positive value but also a negative value. The total change amount of the time series data is not limited to 11. Furthermore, the number of steps is not limited to 23.

Assuming that the number of initial values of the manufacturing conditions is referred to as M, the number of steps is referred to as S, and the number of types of change amounts of the manufacturing conditions per step is referred to as n, the number of patterns of the time series data that can be generated as the manufacturing conditions is M × n^{S}. The training data generation apparatus 120 generates time series data at random, and extracts time series data reaching a final value determined in advance for each initial value, thereby generating training data (details will be described later).

### <FUNCTIONAL CONFIGURATION OF GENERATION UNIT>

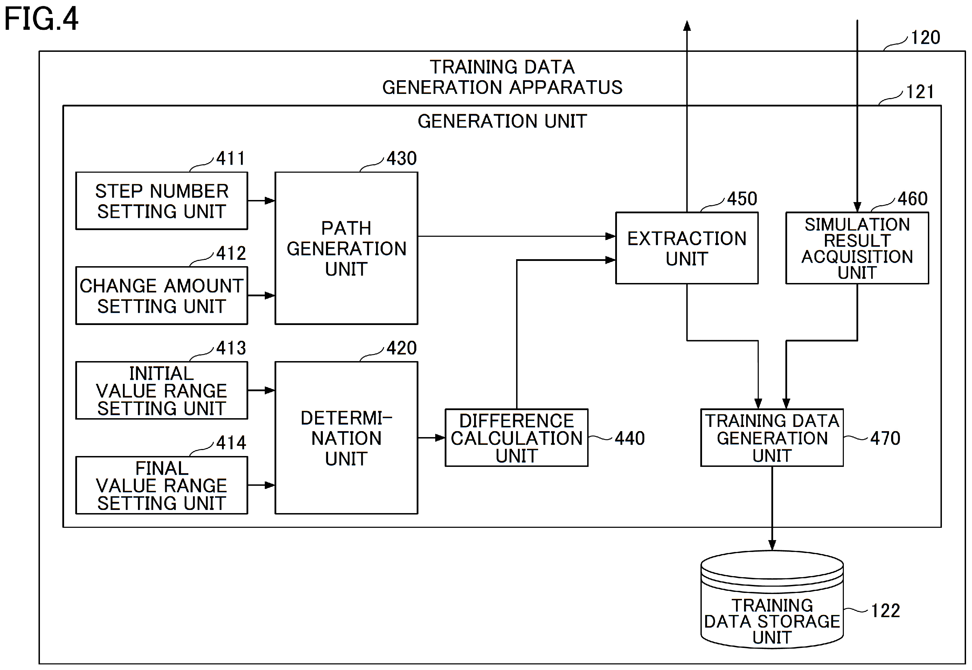

Next, a detailed functional configuration of the generation unit 121 will be described. FIG. 4 is a drawing illustrating a detailed example of a functional configuration of a generation unit.

As shown in FIG. 4, the generation unit 121 includes a step number setting unit 411, a change amount setting unit 412, an initial value range setting unit 413, a final value range setting unit 414, a determination unit 420, a path generation unit 430, and a difference calculation unit 440. The generation unit 121 also includes an extraction unit 450, a simulation result acquisition unit 460, and a training data generation unit 470.

The step number setting unit 411 is one example of the second setting unit, which receives the number of steps input by a user and notifies the path generation unit 430.

The change amount setting unit 412 is one example of the third setting unit, which receives a possible change amount of the manufacturing condition per step input by the user and notifies the path generation unit 430.

The initial value range setting unit 413 receives a possible maximum value and a possible minimum value of the initial value input by the user and notifies the determination unit 420. The final value range setting unit 414 receives a possible maximum value and a possible minimum value of the final value input by the user and notifies the determination unit 420. The initial value range setting unit 413 and the final value range setting unit 414 are examples of the first setting unit.

The determination unit 420 determines a random value as the initial value within the range of the maximum value and the minimum value of the initial value notified from the initial value range setting unit 413 and notifies the difference calculation unit 440.

The determination unit 420 determines a random value as the final value within the range of the maximum value and the minimum value of the final value notified from the final value range setting unit 414 and notifies the difference calculation unit 440.

The path generation unit 430 randomly assigns the change amounts notified from the change amount setting unit 412 to each of the steps defined by the number of steps notified from the step number setting unit 411, which generates various paths and notifies the generated paths to the extraction unit 450. The path generation unit 430 successively adds the change amount assigned to each step to calculate the total change amount for each of the various paths, and notifies the extraction unit 450 of the calculated total change amount.

The difference calculation unit 440 calculates the difference value between the final value and the initial value notified from the determination unit 420 and notifies the calculated difference value to the extraction unit 450.

The extraction unit 450 extracts a path whose total change amount is equal to the difference value notified from the difference calculation unit 440 among the various paths notified from the path generation unit 430. The extraction unit 450 also notifies the simulation apparatus 110 and the training data generation unit 470 of the time series data including the extracted path and the corresponding initial value and final value.

Thus, the simulation apparatus 110 executes physical simulation on the time series data from various simulation patterns generated in the generation unit 121.

The simulation result acquisition unit 460 acquires the simulation result notified from the simulation apparatus 110 in response to the time series data from the various simulation patterns notified to the simulation apparatus 110 by the extraction unit 450. The simulation result acquisition unit 460 notifies the acquired simulation result to the training data generation unit 470.

The training data generation unit 470 generates training data by associating the simulation result notified from the simulation result acquisition unit 460 with the time series data from the various simulation patterns notified from the extraction unit 450. The training data generation unit 470 stores the generated training data in the training data storage unit 122.

### <FLOW OF TRAINING DATA GENERATION PROCESSING>

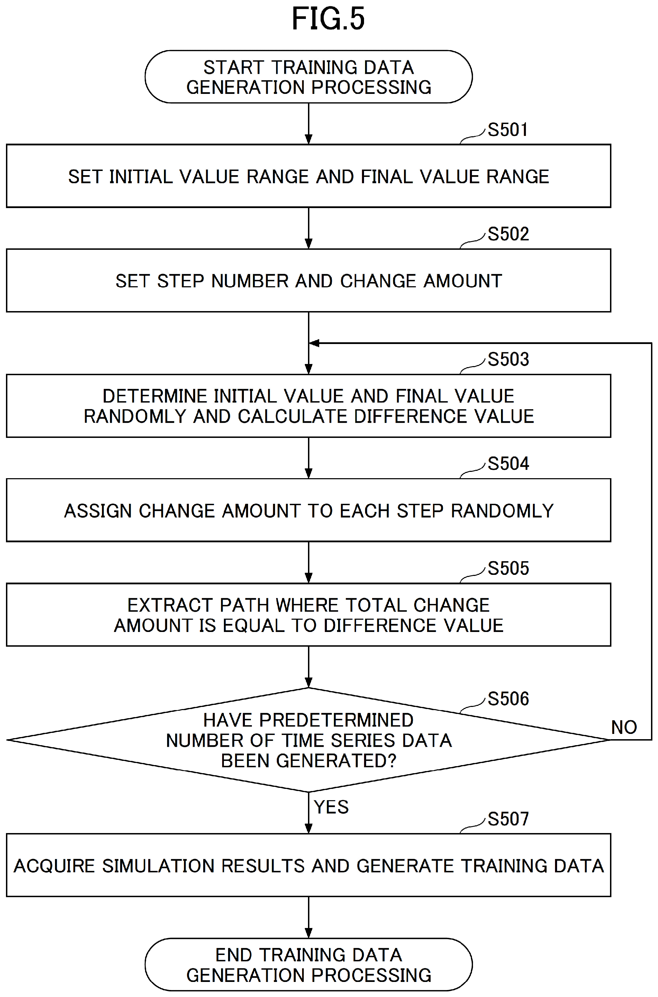

Next, a flow of training data generation processing by the generation unit 121 of the training data generation apparatus 120 will be described. FIG. 5 is an example of a flowchart illustrating a flow of training data generation processing.

In a step S501, the training data generation apparatus 120 receives the maximum and minimum possible initial values and the maximum and minimum possible final values input by the user.

In a step S502, the training data generation apparatus 120 receives the number of steps and the possible change amount of the manufacturing condition per step input by the user.

In a step S503, the training data generation apparatus 120 randomly determines the initial value within the range of the maximum and minimum initial values. The training data generation apparatus 120 randomly determines also the final value within the range of the maximum and minimum final values. Further, the training data generation apparatus 120 calculates a difference value between the randomly determined final value and the initial value.

In a step S504, the training data generation apparatus 120 randomly assigns the received change amount to each step of the number of received steps to generate various paths.

In a step S505, the training data generation apparatus 120 extracts time series data from a path where the total change amount is equal to the difference value among the generated various paths.

In a step S506, the training data generation apparatus 120 determines whether or not time series data from a predetermined number of various simulation patterns have been generated for each prerequisite condition. If it is determined in step S506 that time series data from the predetermined number of the various simulation patterns have not been generated (NO in the step S506), the processing returns to the step S503. In this case, the steps S503 to S505 are executed for other randomly determined initial values and final values to newly generate time series data from various simulation patterns.

Conversely, if it is determined in step S506 that time series data from the predetermined number of the various simulation patterns have been generated (YES in the step S506), the processing proceeds to a step S507.

In the step S507, the training data generation apparatus 120 notifies the simulation apparatus 110 of time series data from the predetermined number of the various simulation patterns. The training data generation apparatus 120 acquires simulation results from the simulation apparatus 110 in response to the notification of time series data from the predetermined number of the various simulation patterns. The training data generation apparatus 120 generates training data by associating the acquired simulation results with time series data from various simulation patterns, and stores the generated data in the training data storage unit 122.

Thus, the training data generation apparatus 120 can generate training data including time series data from a simulation pattern with little bias by providing a configuration in which the initial value and the final value are randomly determined and the path is randomly generated.

### <SPECIFIC EXAMPLE OF TRAINING DATA>

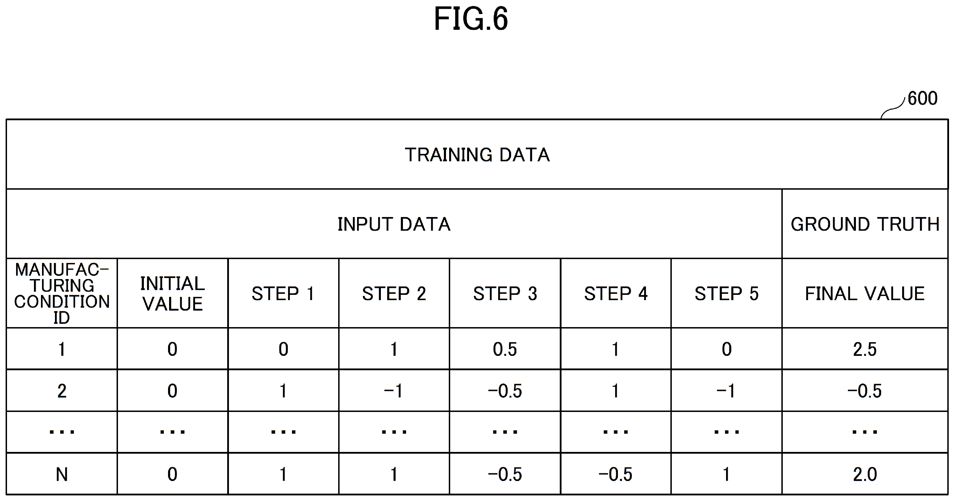

Next, a specific example of training data generated by the training data generation apparatus 120 by executing the training data generation processing shown in FIG. 5 will be described. FIG. 6 is a first drawing illustrating specific examples of training data.

Here, for simplification of the description, when generating the training data 600, the following is assumed:
- number of steps: 5
- possible change amounts in manufacturing conditions per step: -1, -0.5, ±0, +0.5, +1
- maximum and minimum initial values: ±0
- maximum and minimum final values: 5 and -5.

In order to simplify the description, the final value is used as ground truth of the training data 600 instead of obtaining the simulation result.

As shown in FIG. 6, the training data 600 includes "input data" and "ground truth" as information items. The "input data" further includes "manufacturing condition ID," "initial value", and "step 1" to "step 5" as information items.

The "manufacturing condition ID" stores an identifier for identifying each of the time series data from various generated simulation patterns.

The item "initial value" stores an initial value randomly determined within a range between a maximum value and a minimum value of the initial value. Since ±0 is set as the maximum value and the minimum value of the initial value, "0" is stored in the item "initial value".

The items "step 1" to "step 5" store a change amount randomly assigned from among possible change amounts of the manufacturing conditions per step.

Additionally, the item "ground truth" further includes an item "final value" as an item of information. The item "final value" stores a value obtained by adding a total change amount obtained by successively adding the change amount assigned to each step to the initial value.

### <DISTRIBUTION OF TRAINING DATA>

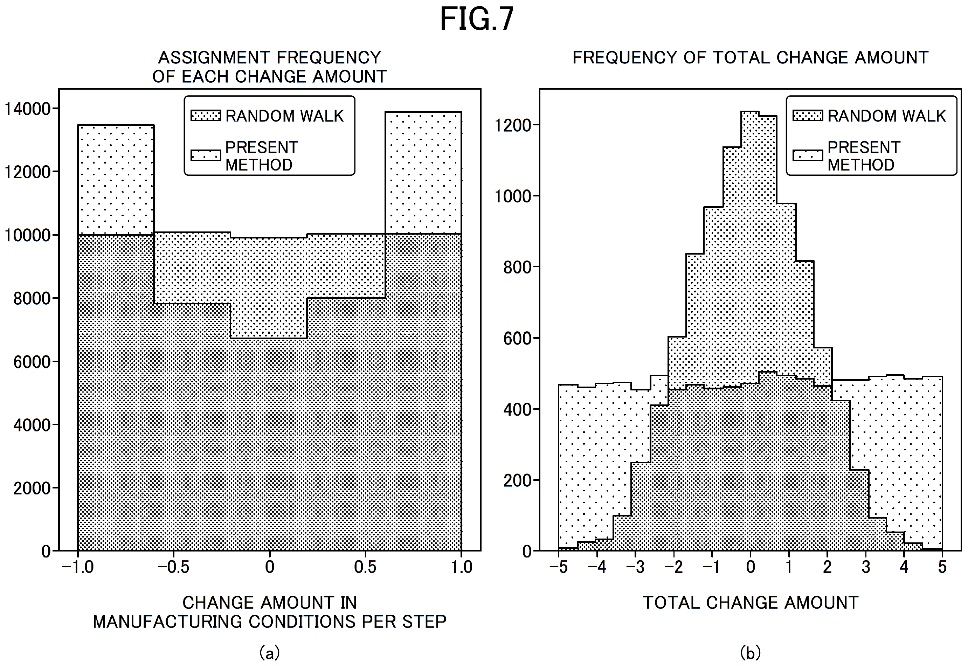

Next, distribution of time series data from various simulation patterns generated by the training data generation apparatus 120 by executing the training data generation processing shown in FIG. 5 and stored in the item "input data" of the training data 600 will be described. FIG. 7 is a drawing illustrating an example of the distribution of input data of the training data generated by the training data generation processing.

In FIG. 7 (a), the horizontal axis represents the change amount that can be taken in the manufacturing conditions per step, and the vertical axis represents an assignment frequency of the change amount assigned to each step. In the example shown in FIG. 7 (a),
- the case of time series data from various simulation patterns generated based on random walk theory, and
- the case of time series data from various simulation patterns generated by the training data generation processing shown in FIG. 5
are overlapped and displayed for comparison.

As shown in FIG. 7 (a), in the case of time series data from various simulation patterns generated based on random walk theory, the assignment frequency of the change amount assigned to each step is uniform. Conversely, in the case of time series data from various simulation patterns generated by the training data generation processing shown in FIG. 5, the assignment frequency of the change amount assigned to each step is not uniform, and -1 or 1 is assigned at a higher frequency than ±0.

Additionally, in FIG. 7 (b), the horizontal axis represents the total change amount, and the vertical axis represents the frequency of the total change amount. Also in the example shown in FIG. 7 (b),
- the case of time series data from various simulation patterns generated based on random walk theory, and
- the case of time series data from various simulation patterns generated by the training data generation processing shown in FIG. 5
are overlapped and displayed for comparison.

As shown in FIG. 7 (b), in the case of the time series data from various simulation patterns generated based on random walk theory, the frequency of the total change amount ±0 is the highest, and the frequency of the total change amount -5 or +5 is the lowest. That is, as the number of simulation patterns increases, the newly generated simulation patterns become biased toward the average value of the previously generated simulation patterns.

Conversely, in the case of the time series data from various simulation patterns generated by the training data generation processing shown in FIG. 5, the frequency of the total change amount is uniform.

In this way, the time series data from various simulation patterns generated by the training data generation processing shown in FIG. 5 can be regarded as less biased, that is, more uniformly distributed.

### <SPECIFIC EXAMPLE OF PATH>

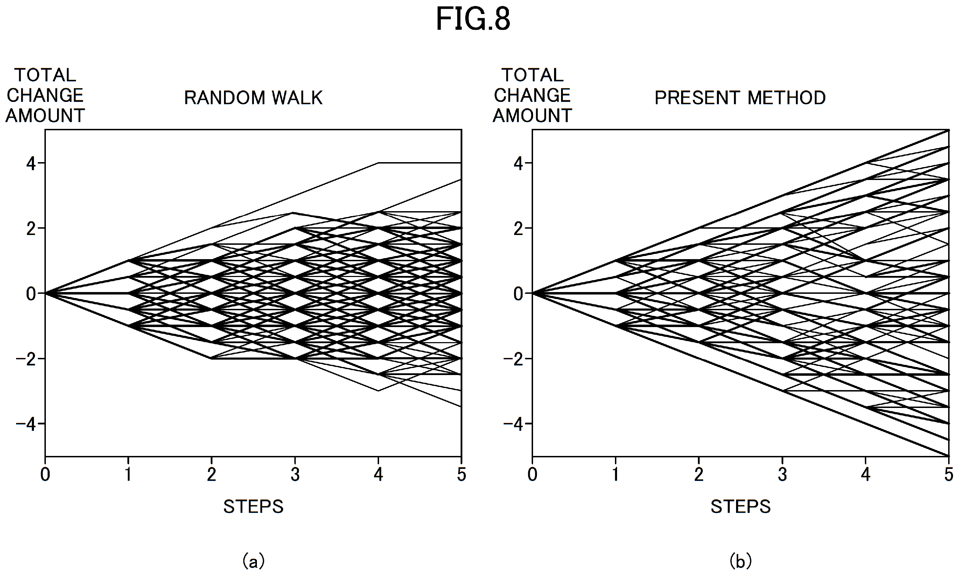

Next, a specific example of a path generated by the training data generation apparatus 120 by executing the training data generation processing shown in FIG. 5 will be described. FIG. 8 is a drawing illustrating an example of a path generated by the training data generation processing. In FIG. 8, the horizontal axis represents steps, and the vertical axis represents the total change amount up to each step.

FIG. 8 (a) shows time series data from various simulation patterns generated based on random walk theory. FIG. 8 (b) shows time series data from various simulation patterns generated by the training data generation processing shown in FIG. 5.

As is apparent from the comparison between FIGS. 8 (a) and 8 (b), in the case of the time series data from various simulation patterns generated based on random walk theory, paths in which the total change amount passes near ±0 are generated with high frequency. Conversely, in the time series data from various simulation patterns generated by the training data generation processing shown in FIG. 5, there is no bias towards paths in which the total change amount passes near ±0 and generated paths are uniformly distributed.

### <PREDICTION ACCURACY OF TRAINED MODEL>

Next, the prediction accuracy of the trained model will be described when a predetermined model is trained using the training data generated by the training data generation apparatus 120 by executing the training data generation processing and a surrogate model as the trained model is constructed. Hereinafter, a four-layer perceptron, which is a neural network constructed using the neural network library keras, is used as a predetermined model.

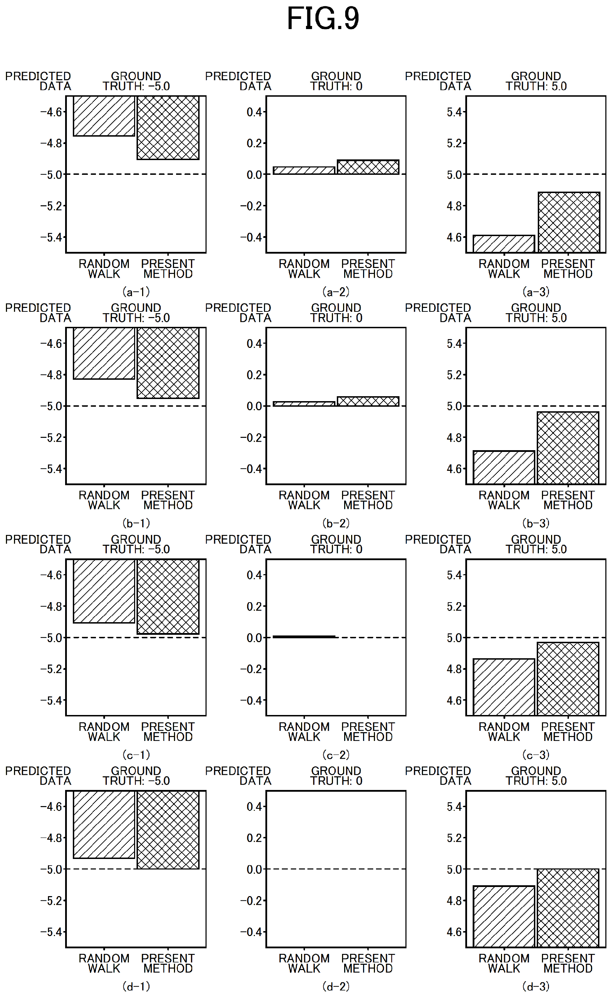

FIG. 9 is a first drawing illustrating an example of the prediction accuracy of a trained model trained using the training data generated by the training data generation processing.

In FIG. 9, (a-1) to (a-3) are graphs illustrating predicted data when:
- 500 pieces of time series data of manufacturing condition ID = 1 to 500 are generated in the training data 600;
- a predetermined model using the generated 500 pieces of the time series data is trained to construct a trained model; and
- the following data are input to the constructed trained model:
   - time series data of "ground truth = -5.0" is input as input data;
   - time series data of "ground truth = 0" is input as input data; and
   - time series data of "ground truth = 5.0" is input as input data.
The left side of each graph shows predicted data obtained by the trained model, in a comparative example where 500 pieces of time series data were generated based on random walk theory.

Similarly, in FIG. 9, (b-1) to (b-3) are graphs illustrating predicted data when:
- 1000 pieces of time series data of manufacturing condition ID = 1 to 1000 are generated in the training data 600;
- a predetermined model using the generated 1000 pieces of the time series data is trained to construct a trained model; and
- the following data are input to the constructed trained model:
   - time series data of "ground truth = -5.0" is input as input data;
   - time series data of "ground truth = 0" is input as input data; and
   - time series data of "ground truth = 5.0" is input as input data.
The left side of each graph shows predicted data obtained by the trained model, in a comparative example where 1000 pieces of time series data were generated based on random walk theory.

Similarly, in FIG. 9, (c-1) to (c-3) are graphs illustrating predicted data when:
- 5000 pieces of time series data of manufacturing condition ID = 1 to 5000 are generated in the training data 600;
- a predetermined model using the generated 5000 pieces of the time series data is trained to construct a trained model; and
- the following data are input to the constructed trained model:
   - time series data of "ground truth = -5.0" is input as input data;
   - time series data of "ground truth = 0" is input as input data; and
   - time series data of "ground truth = 5.0" is input as input data.
The left side of each graph shows predicted data obtained by the trained model, in a comparative example where 5000 pieces of time series data were generated based on random walk theory.

Similarly, in FIG. 9, (d-1) to (d-3) are graphs illustrating predicted data when:
- 10000 pieces of time series data of manufacturing condition ID = 1 to 10000 are generated in the training data 600;
- a predetermined model using the generated 10000 pieces of the time series data is trained to construct a trained model; and
- the following data are input to the constructed trained model:
   - time series data of "ground truth = -5.0" is input as input data;
   - time series data of "ground truth = 0" is input as input data; and
   - time series data of "ground truth = 5.0" is input as input data.
The left side of each graph shows predicted data obtained by the trained model, in a comparative example where 10000 pieces of time series data were generated based on random walk theory.

Thus, when the trained model constructed using the training data generated by the training data generation processing shown in FIG. 5 is compared with the trained model constructed using the training data generated based on random walk theory:
- the trained model constructed using the training data generated by the training data generation processing shown in FIG. 5 can achieve higher prediction accuracy when predicting a value far from the average value regardless of the number of training data; and
- as the number of training data increases, the prediction accuracy in predicting a value close to the average value becomes similar.

In other words, it was shown that the prediction accuracy can be improved by reducing the bias of the time series data from the simulation pattern.

### <SUMMARY>

As is clear from the above description, the training data generation apparatus 120 according to the first embodiment is a training data generation apparatus for constructing a surrogate model, wherein:
- the initial value of the input data and the final value of the input data are determined at random;
- a path is generated by randomly assigning to each step a change amount that can be taken by each step in the path from the determined initial value to the final value; and
- training data including the determined initial value and the final value and the change amount assigned to each step of the generated path is generated.

As described above, the training data generation apparatus 120 according to the first embodiment is configured to randomly determine the initial value and the final value and then randomly generate the path. Thus, according to the training data generation apparatus 120 according to the first embodiment, it is possible to generate training data including time series data from a simulation pattern with less bias than training data generated based on random walk theory.

In other words, according to the first embodiment, when generating training data for constructing a surrogate model, it is possible to reduce the bias of the simulation pattern.

### [SECOND EMBODIMENT]

In the first embodiment, a case where the final value is used as the ground truth of the training data when verifying the prediction accuracy of the trained model has been described. That is, the prediction accuracy of the trained model is verified on the premise of the training data when the ground truth has a linear relationship with the input data. Conversely, in the second embodiment, the prediction accuracy of the trained model is verified on the premise of the training data when the ground truth has a nonlinear relationship with the input data.

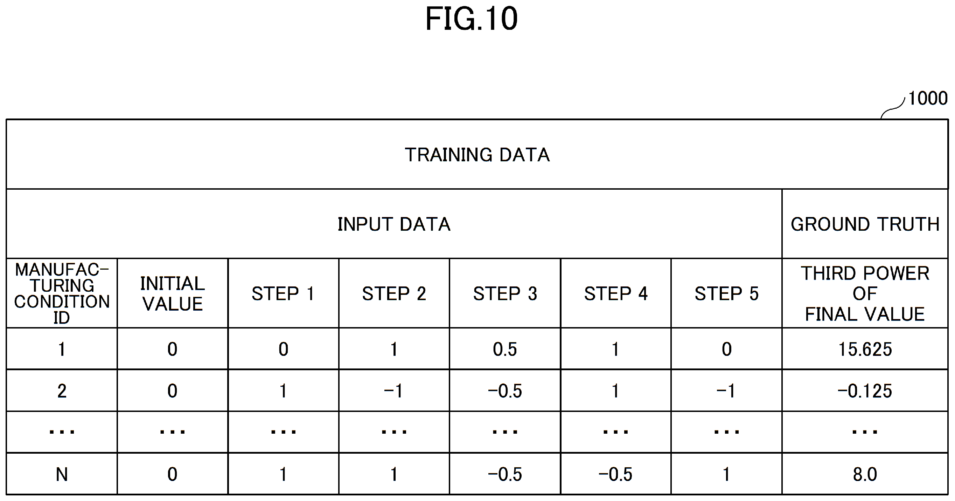

FIG. 10 is a second drawing illustrating specific examples of the training data. The difference from the training data 600 shown in FIG. 6 is that a value obtained by raising the final value to the third power is stored instead of storing the final value as the ground truth.

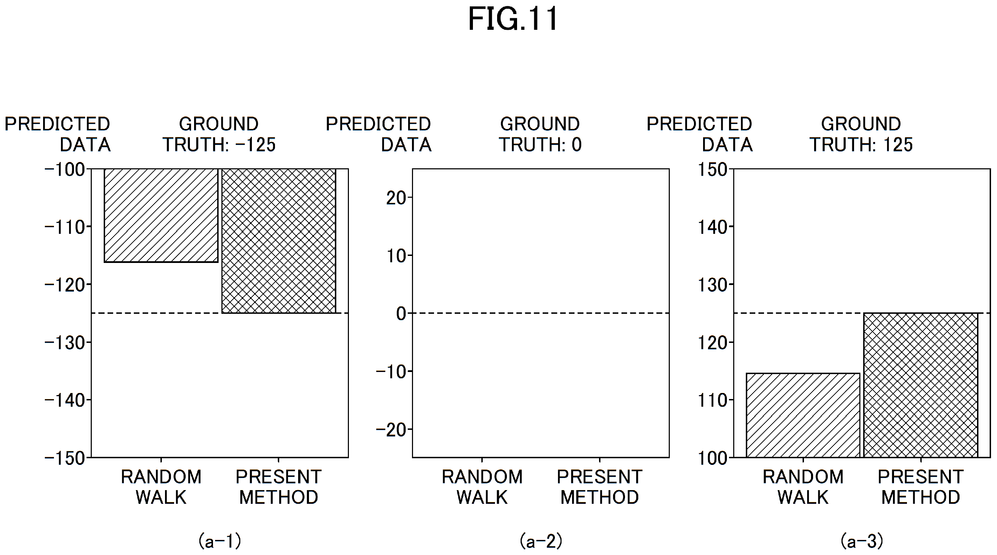

FIG. 11 is a second drawing illustrating an example of the prediction accuracy of a trained model trained using the training data generated by the training data generation processing.

In FIG. 11, (a-1) to (a-3) are graphs illustrating predicted data when:
- 5000 pieces of time series data of manufacturing condition ID = 1 to 5000 are generated in the training data 1000;
- a predetermined model using the generated 5000 pieces of the time series data is trained to construct a trained model; and
- the following data are input to the constructed trained model:
   - time series data of "ground truth = -125" is input as input data;
   - time series data of "ground truth = 0" is input as input data; and
   - time series data of "ground truth = 125" is input as input data.
The left side of each graph shows predicted data obtained by the trained model, in a comparative example where 5000 pieces of time series data were generated based on random walk theory.

As described above, according to the second embodiment, it is possible to construct a trained model with high prediction accuracy even when the ground truth are the training data in a case where the ground truth have a nonlinear relationship with the input data.

### [OTHER EMBODIMENTS]

In the first embodiment, the input data of the training data are the manufacturing conditions of the manufacturing apparatus 10, but the input data of the training data are not limited to the manufacturing conditions of the manufacturing apparatus 10, and may be other physical quantities input to the simulation apparatus 110.

In the first embodiment, the user inputs the number of steps, the change amount in the manufacturing condition per step, the maximum and minimum values of the initial value, and the maximum and minimum values of the final value. However, any of these values may be preset in the training data generation apparatus 120.

In the first embodiment, when the range of the initial value is input, the maximum and minimum values of the initial value are input, but methods of inputting the range of the initial value are not limited to this. Similarly, in the first embodiment, when the range of the final value is input, the maximum and minimum values of the final value are input, but methods of inputting the range of the final value are not limited to this.

In the first embodiment, details of the determination method when the initial value and the final value are randomly determined are not mentioned, but for example, the initial value and the final value may be randomly determined by using a uniform random number. Alternatively, the initial value and the final value may be randomly determined by using a random number according to a predetermined generation distribution. In any case, the initial value and the final value are determined so as to vary.

Further, the present invention is not limited to these embodiments, and a plurality of change amounts and modifications may be made without departing from the scope of the present invention.

The present application is based on and claims priority to Japanese patent application No. 2023-176970 filed on October 12, 2023, with the Japan Patent Office, the entire contents of which are hereby incorporated by reference.

### REFERENCE SIGNS LIST

- 10 :: manufacturing apparatus

- 100 :: training system
- 110 :: simulation apparatus
- 120 :: training data generation apparatus
- 121 :: generation unit
- 130 :: training apparatus
- 131 :: training unit
- 411 :: step number setting unit
- 412 :: change amount setting unit
- 413 :: initial value range setting unit
- 414 :: final value range setting unit
- 420 :: determination unit
- 430 :: path generation unit
- 440 :: difference calculation unit
- 450 :: extraction unit
- 460 :: simulation result acquisition unit
- 470 :: training data generation unit
- 600 :: training data
- 1000 :: training data

## Claims

1. A training data generation apparatus for generating training data for constructing a surrogate model, comprising:
a determination unit configured to randomly determine an initial value of input data and a final value of the input data;
a path generation unit configured to generate one or more paths from the determined initial value to the determined final value by randomly assigning, to respective steps along the one or more paths, one or more change amounts that can be taken at the respective steps; and
a training data generation unit configured to generate training data including the determined initial value, the determined final value, and the one or more change amounts assigned to the respective steps in the generated one or more paths.

2. The training data generation apparatus according to claim 1, further comprising an extraction unit configured to extract, from among the generated one or more paths, a path in which a total change amount obtained by summing the one or more change amounts assigned to respective steps is equal to a difference value between the determined final value and the determined initial value, wherein the training data generation unit is configured to generate training data including the determined initial value, the determined final value, and the one or more change amounts assigned to the respective steps of the extracted path.

3. The training data generation apparatus according to claim 1 or 2, further comprising a first setting unit configured to receive a range of the initial value of the input data and a range of the final value of the input data, respectively, wherein the determination unit is configured to randomly determine, within said ranges the first setting unit has received, the initial value of the input data and the final value of the input data, respectively.

4. The training data generation apparatus according to any one of claims 1 to 3, further comprising a second setting unit configured to receive a number of the steps, wherein the path generation unit is configured to randomly assign, to the respective steps whose number the second setting unit has received, the one or more change amounts that can be taken at the respective steps.

5. The training data generation apparatus according to any one of claims 1 to 4, further comprising a third setting unit configured to receive the one or more change amounts that can be taken at the respective steps, wherein the path generation unit is configured to randomly assign the one or more change amounts received by the third setting unit to the respective steps.

6. The training data generation apparatus according to claim 2, further comprising an acquisition unit configured to acquire a simulation result with the determined initial value, the determined final value, and the one or more change amounts assigned to the respective steps of the extracted path as input data input to a simulation apparatus, wherein the training data generation unit is configured to generate the training data including the one or more change amounts assigned to the respective steps of the extracted path and the simulation result.

7. A training data generation method for generating training data for constructing a surrogate model, wherein a computer of a training data generation apparatus is configured to execute:
randomly determining an initial value of input data and a final value of the input data;
generating one or more paths from the determined initial value to the determined final value by randomly assigning, to respective steps along the one or more paths, one or more change amounts that can be taken at the respective steps; and
generating training data including the determined initial value, the determined final value, and the one or more change amounts assigned to the respective steps in the generated one or more paths.

8. A training data generation program for causing a computer of a training data generation apparatus to execute:
randomly determining an initial value of input data and a final value of the input data;
generating one or more paths from the determined initial value to the determined final value by randomly assigning, to respective steps along the one or more paths, one or more change amounts that can be taken at the respective steps; and
generating training data including the determined initial value, the determined final value, and the one or more change amounts assigned to the respective steps in the generated one or more paths.
